# EUROPÄISCHE PATENTANMELDUNG

(11) **EP 4 083 731 A1**
(43) Veröffentlichungstag der Anmeldung: **02.11.2022**
(21) Anmeldenummer: 21170728.6
(22) Anmeldetag: 27.04.2021
(51) Int. Cl.: G05B 23/02

(54) **ALARMMANAGEMENT IN PROZESSANLAGEN**

(71) Anmelder: Siemens Aktiengesellschaft, 80333 München (DE)
(72) Erfinder: Lutz, Benjamin, 76327 Pfinztal (DE)

(57) **Zusammenfassung**

Vorgeschlagen wird ein Verfahren zur visuellen Darstellung einer Mehrzahl von Prozessobjekten (2) einer Prozessanlage durch ein Leitsystem (11) der Prozessanlage, umfassend:
a) Für die Mehrzahl von Prozessobjekten (2) jeweils automatisierte Zuordnung eines Gruppenalarmstatus (6, 7) zu einem Prozessobjekt (2) und zu einer Prozessvariablen (4) des Prozessobjektes (2) durch ein computerimplementiertes Projektierungswerkzeug (23) des Leitsystems (11) in einer Projektierungsphase der Prozessanlage, wobei der Gruppenalarmstatus (6, 7) jeweils verschiedene Werte aufweisen kann, und wobei dem Gruppenalarmstatus (6, 7) durch das computerimplementierte Projektierungswerkzeug (23) jeweils ein initialer Wert zugewiesen wird,
b) Überwachung von in der Prozessanlage aufkommenden Alarmen (3) durch einen computerimplementierten Alarmverwaltungsdienst (20) des Leitsystems (11) in einer Betriebsphase der Prozessanlage,
c) Auf Basis der aufkommenden Alarme (3) Identifizierung von durch die Alarme (3) betroffenen Gruppenalarmstatus (6, 7) und Aktualisierung des jeweiligen Wertes der Gruppenalarmstatus (6, 7) durch den computerimplementierten Alarmverwaltungsdienst (20) des Leitsystems (11) der Prozessanlage,
d) Visuelle Darstellung der Prozessobjekte (2) mit den dazugehörigen Gruppenalarmstatus (6, 7) durch das Leitsystem (11) der Prozessanlage.

## Beschreibung

Die Erfindung betrifft ein Verfahren zur visuellen Darstellung einer Mehrzahl von Prozessobjekten einer Prozessanlage durch ein Leitsystem der Prozessanlage. Außerdem betrifft die Erfindung ein Leitsystem für eine Prozessanlage, das einen Operator Station Server, einen Engineering Station Server und einen Operator Station Client aufweist, wobei der Engineering Station Server ein computerimplementiertes Projektierungswerkzeug umfasst, und wobei der Operator Station Server dazu ausgebildet ist, zur visuellen Darstellung eine zuvor durch einen auf dem Engineering Station Server computerimplementiertes Projektierungswerkzeug erzeugte Mehrzahl von Prozessobjekten der Prozessanlage an den Operator Station Client zu übertragen.

Ein wesentliches Ziel eines effizienten Alarmmanagements technischer Anlagen ist es, dass ein Operator möglichst schnell Alarme erkennen und zu deren Quelle navigieren kann. Da es in einer großen technischen Anlage Tausende von Alarmquellen geben kann, ist es nützlich, Alarme über eine Gruppenbildung (Gruppenalarme bzw. Summenalarme) sinnvoll zusammenzufassen und den Operatoren der technischen Anlage visuell darzubieten.

Gruppenalarme müssen nach dem Stand der Technik in einer Engineering-Phase der technischen Anlage bzw. deren Automatisierung aufwändig manuell projektiert werden. Dabei wird unter anderem festgelegt, welche Alarme der technischen Anlage zu einem Gruppenalarm nach bestimmten Regeln zusammengefasst werden. Dieser Gruppenalarm kann dann beispielsweise in einem Anlagenbild der technischen Anlage durch ein entsprechendes Symbol zur Anzeige gebracht werden.

Manuell projektierte Gruppenalarme sind jedoch fehleranfällig, da je nach Anlagenteil eine Vielzahl von Alarmen für einen Gruppenalarm berücksichtigt werden muss. Es kann beispielsweise vorkommen, dass Alarme bei der Projektierung übersehen werden, so dass der dargestellte Gruppenalarm nicht den tatsächlichen Alarmstatus des betreffenden Anlagenteils repräsentiert. Auch die Projektierung der Regeln, gemäß denen verschiedene Alarme zu den Gruppenalarmen zusammengefasst werden sollen (z.B. führend soll der neuste, wichtigste, nicht quittierte Alarm sein, der weder verborgen oder out-of-Service ist...), ist fehleranfällig und führt oftmals zu einem unbeabsichtigten Verhalten bei der Gruppenalarmbildung.

In der EP 2 092 499 B1 und in der EP 1 855 172 A1 sind Leitsysteme offenbart, die jeweils über ein Alarmmanagement verfügen. Mithilfe dieser Alarmmanagementmodule können Alarme von Komponenten technischer Anlagen unter anderem erfasst, visuell dargestellt und weiterverarbeitet werden.

In einer Prozessanlage können sehr viele Alarme in einem engen zeitlichen Zusammenhang auftreten. Das Erfassen, Weiterverarbeiten und eine visuelle Darstellung der Alarme in einem Leitsystem der Prozessanlage können zu einer beträchtlichen Belastung einer Serverinfrastruktur der Prozessanlage führen. Bei einer gruppierenden Anzeige von Alarmen eines bestimmten Prozessobjektes der Prozessanlage erhöht sich der Aufwand, der für die Aktualisierung dieser gruppierenden Anzeige, eines sogenannten Gruppenalarms, aufgebracht werden muss, weiter. Gerade bei, oftmals sicherheitskritischen, Prozessanlagen ist es jedoch essenziell, dass ein effizientes und verlässliches Alarmmanagement betrieben wird.

Der Erfindung liegt die Aufgabe zugrunde, ein Verfahren zur visuellen Darstellung einer Mehrzahl von Prozessobjekten einer Prozessanlage und ein dazugehöriges Leitsystem für eine Prozessanlage anzugeben, das mit einer hohen Verfügbarkeit Anlagenbilder und/oder Prozessobjekte einer Prozessanlage mit dazugehörigen Gruppenalarmen visuell einem Operator der Prozessanlage darstellen kann, ohne dabei eine Serverinfrastruktur der Prozessanlage übermäßig zu belasten.

Diese Aufgabe wird gelöst durch ein Verfahren zur visuellen Darstellung einer Mehrzahl von Prozessobjekten einer Prozessanlage durch ein Leitsystem der Prozessanlage mit den Merkmalen des Anspruchs 1. Zudem wird die Aufgabe gelöst durch Verfahren zur visuellen Darstellung eines Anlagenbildes einer Prozessanlage durch ein Leitsystem der Prozessanlage gemäß Anspruch 4. Zudem wird die Aufgabe gelöst durch ein Leitsystem für eine Prozessanlage, das einen Operator Station Server, einen Engineering Station Server und einen Operator Station Client aufweist, gemäß Anspruch 7. Zudem wird die Aufgabe gelöst durch ein Leitsystem für eine Prozessanlage, das einen Operator Station Server, einen Engineering Station Server und einen Operator Station Client aufweist, gemäß Anspruch 10. Außerdem wird die Aufgabe gelöst durch die Verwendung eines Leitsystems gemäß Anspruch 13. Vorteilhafte Weiterbildungen ergeben sich aus den abhängigen Ansprüchen.

Ein Verfahren eingangs beschriebener Art umfasst die folgenden Verfahrensschritte:
a) Für die Mehrzahl von Prozessobjekten jeweils automatisierte Zuordnung eines Gruppenalarmstatus zu einem Prozessobjekt und zu einer Prozessvariablen des Prozessobjektes durch ein computerimplementiertes Projektierungswerkzeug des Leitsystems in einer Projektierungsphase der Prozessanlage, wobei der Gruppenalarmstaus jeweils verschiedene Werte aufweisen kann, und wobei dem Gruppenalarmstatus durch das computerimplementierte Projektierungswerkzeug jeweils ein initialer Wert zugewiesen wird;
b) Überwachung von in der Prozessanlage aufkommenden Alarmen durch einen computerimplementierten Alarmverwaltungsdienst des Leitsystems in einer Betriebsphase der Prozessanlage;
c) Auf Basis der aufkommenden Alarme Identifizierung von durch die Alarme betroffenen Gruppenalarmstatus und Aktualisierung des jeweiligen Wertes der Gruppenalarmstatus durch den computerimplementierten Alarmverwaltungsdienst des Leitsystems der Prozessanlage;
d) Visuelle Darstellung der Prozessobjekte mit den dazugehörigen Gruppenalarmstatus durch das Leitsystem der Prozessanlage.

Unter einem Leitsystem wird im vorliegenden Kontext ein computergestütztes technisches System verstanden, das Funktionalitäten zum Darstellen, Bedienen und Leiten einer Prozessanlage umfasst. Man spricht in diesem Kontext auch von einem Prozessleitsystem. Das Leitsystem kann neben einem Operator Station Server, einem Operator Station Client und einem Engineering Station Server beispielsweise auch sogenannte prozess- oder fertigungsnahe Komponenten umfassen, die zur Ansteuerung von Aktoren bzw. Sensoren dienen.

Bei der Prozessanlage kann es sich um eine chemische, pharmazeutische, petrochemische oder eine Anlage aus der Nahrungs-und Genussmittelindustrie handeln.

Unter dem Begriff "Prozessobjekte" sind jegliche technischen Objekte der Prozessanlage zu verstehen, die durch das Leitsystem der Prozessanlage automatisierbar sowie bedien- und beobachtbar sind. Darunter fallen unter anderem Sensoren, Aktoren oder übergeordnete Einrichtungen zur Steuerung von einzelnen Komponenten der Prozessanlage (wie beispielsweise eine speicherprogrammierbare Steuerung). Streng genommen werden im erfindungsgemäßen Verfahren die Gruppenalarme nicht der Mehrzahl von Prozessobjekten als physikalische Objekte zugeordnet, sondern digitalen Repräsentationen der Prozessobjekte, die im Leitsystem der Prozessanlage hinterlegt sind. Diese Unterscheidung ist für den Ablauf und das Verständnis des erfindungsgemäßen Verfahrens jedoch nicht von Relevanz.

Im ersten Verfahrensschritt (a) werden den Prozessobjekten und den zu den Prozessobjekten gehörigen Prozessvariablen Gruppenalarmstatus automatisiert zugeordnet. "Prozessvariable" sind dabei für ein jeweiliges Prozessobjekt charakteristische Eigenschaften. Es kann sich dabei beispielsweise um die Kombination eines Prozessmesswertes, einer Beschreibung des Typs des Prozessobjektes und eines Betriebsmodus des Prozessobjektes handeln. Wichtig ist, dass die Prozessvariablen jeweils charakteristisch für ein jeweiliges Prozessobjekt sind und für eine eindeutige Identifizierung des den Prozessvariablen jeweils zugrundeliegenden Prozessobjektes geeignet sind. Im Zusammenhang mit dem Prozessleitsystem "SIMATIC PCS 7" der Firma SIEMENS spricht man im Zusammenhang mit einer Prozessvariablen auch von einem sogenannten "Tag".

In einer Projektierungsphase der Prozessanlage, in der ein Projekteur typischerweise eine Automatisierung der Prozessanlage erstellt, d.h. ein Zusammenspiel der einzelnen Prozessobjekte orchestriert, wird durch ein computerimplementiertes Projektierungswerkzeug automatisiert den jeweiligen in der Projektierung verwendeten Prozessobjekten ein Gruppenalarmstatus zugewiesen. Ein solches computerimplementiertes Projektierungswerkzeug wird beispielsweise, ohne sich darauf zu beschränken, durch das System "SIMATIC PCS 7 Engineering" der Firma SIEMENS bereitgestellt.

Der Begriff "Gruppenalarmstatus" bedeutet dabei, dass wenigstens zwei Alarme von beliebigen Prozessobjekten den Gruppenalarmstatus des jeweiligen Prozessobjektes bestimmen. Weist beispielweise ein Status eines ersten Alarms einen Wert "Aktiv" und ein Status eines zweiten Alarms einen Wert "Inaktiv" auf, kann der Wert des Gruppenalarmstatus "Aktiv" sein. Weitere Werte für die Status wie beispielsweise "Kritisch", "Sichtbar", "Quittiert" oder "Priorität X" können verwendet werden.

Der computerimplementierte Alarmverwaltungsdienst greift auf die im Leitsystem aufkommenden Alarme zu und ordnet diese dynamisch und automatisiert zur Laufzeit der Prozessanlage einem Prozessobjekt zu, um dessen Gruppenalarmstatus zu aktualisieren. Derart zentralisiert muss jeder im Leitsystem auftretende Alarm nur einmal verarbeitet werden, unabhängig davon wie viele Alarm-anzeigende Gruppenalarmstatus vom Leitsystem bereitgestellt werden sollen. Hierdurch kann das erfindungsgemäße Verfahren eine leistungsoptimale Implementierung eines Alarmmanagements in einem Leitsystem einer Prozessanlage bereitstellen.

Eine besonders übersichtliche und intuitive Art und Weise, die Prozessobjekte mit den dazugehörigen Gruppenalarmstatus visuell darzustellen, folgt einer hierarchischen Ordnung der Prozessobjekte innerhalb der Prozessanlage.

Besonders bevorzugt ist bei der Aktualisierung des jeweiligen Wertes der Gruppenalarmstatus durch den computerimplementierten Alarmverwaltungsdienst der Wert desjenigen Alarms für den jeweiligen Gruppenalarmstatus bestimmend, welcher eine höchste Priorität und/oder einen neuesten Zeitstempel aufweist und/oder nicht quittiert wurde und/oder von keiner Alarmunterdrückung betroffen ist.

Die zuvor ausgeführte Aufgabe wird zudem gelöst durch ein Verfahren zur visuellen Darstellung eines Anlagenbildes einer Prozessanlage durch ein Leitsystem der Prozessanlage mit den folgenden Verfahrensschritten:
a) In einer Projektierungsphase der Prozessanlage Zuordnung einer Mehrzahl von Prozessobjekten zu dem Anlagenbild und automatisierte Zuordnung jeweils eines Gruppenalarmstatus zu dem Anlagenbild und zu den Prozessobjekten durch ein computerimplementiertes Projektierungswerkzeug des Leitsystems der Prozessanlage, wobei der Gruppenalarmstatus jeweils verschiedene Werte aufweisen kann, und wobei dem Gruppenalarmstatus durch das computerimplementierte Projektierungswerkzeug jeweils ein initialer Wert zugewiesen wird,
b) Überwachung von in der Prozessanlage aufkommenden Alarmen durch einen computerimplementierten Alarmverwaltungsdienst des Leitsystems in einer Betriebsphase der Prozessanlage,
c) Auf Basis der aufkommenden Alarme Identifizierung von durch die Alarme betroffenen Gruppenalarmstatus und Aktualisierung des jeweiligen Wertes der Gruppenalarmstatus durch den computerimplementierten Alarmverwaltungsdienst des Leitsystems der Prozessanlage,
d) Visuelle Darstellung des Anlagenbildes und der dazugehörigen Prozessobjekte mit den dazugehörigen Gruppenalarmstatus durch das Leitsystem der Prozessanlage.

Im Unterschied zum zuvor erläuterten Verfahren wird bei diesem Verfahren zusätzlich einem Anlagenbild in der Projektierungsphase ein Gruppenalarmstatus zugewiesen. Das Anlagenbild gibt einen Überblick über die gesamten Prozessobjekte der Prozessanlage (bei einfachen Prozessanlagen) oder über einen Teil/Ausschnitt der Prozessanlage (bei komplexeren Prozessanlagen). Der Gruppenalarmstatus des Anlagenbildes ermöglicht (in an sich bekannter Weise) einen Überblick über die Gruppenalarmstatus der zugeordneten Prozessobjekte und wird, analog zum zuvor erläuterten Verfahren, besonders ressourcensparend durch den computerimplementierten Alarmverwaltungsdienst aktuell gehalten.

Auch bei diesem Verfahren können die Prozessobjekte vorteilhafterweise mit den dazugehörigen Gruppenalarmstatus gemäß ihrer hierarchischen Ordnung innerhalb der Prozessanlage visuell dargestellt werden.

Zudem kann bei der Aktualisierung des jeweiligen Wertes der Gruppenalarmstatus durch den computerimplementierten Alarmverwaltungsdienst der Wert desjenigen Alarms für den jeweiligen Gruppenalarmstatus bestimmend sein, welcher eine höchste Priorität und/oder einen neuesten Zeitstempel aufweist und/oder nicht quittiert wurde und/oder von keiner Alarmunterdrückung betroffen ist.

Die obenstehende Aufgabe wird zudem gelöst durch ein Leitsystem für eine Prozessanlage, das einen Operator Station Server, einen Engineering Station Server und einen Operator Station Client aufweist, wobei der Engineering Station Server ein computerimplementiertes Projektierungswerkzeug umfasst, und wobei der Operator Station Server dazu ausgebildet ist, zur visuellen Darstellung eine zuvor durch einen auf dem Engineering Station Server computerimplementiertes Projektierungswerkzeug erzeugte Mehrzahl von Prozessobjekten der Prozessanlage an den Operator Station Client zu übertragen. Das Leitsystem ist dadurch gekennzeichnet, dass das computerimplementierte Projektierungswerkzeug dazu ausgebildet ist, für die Mehrzahl von Prozessobjekten jeweils eine automatisierte Zuordnung eines Gruppenalarmstatus zu dem Prozessobjekt und zu einer Prozessvariablen des Prozessobjektes in einer Projektierungsphase der Prozessanlage vorzunehmen, wobei der Gruppenalarmstatus jeweils verschiedene Werte aufweisen kann, und wobei das computerimplementierte Projektierungswerkzeug dazu ausgebildet ist, dem Gruppenalarmstatus jeweils einen initialen Wert zuzuweisen, und wobei der computerimplementierte Alarmverwaltungsdienst des Leitsystems dazu ausgebildet ist, eine Überwachung von in der Prozessanlage aufkommenden Alarmen in einer Betriebsphase der Prozessanlage vorzunehmen, und auf Basis der aufkommenden Alarme eine Identifizierung von durch die Alarme betroffenen Gruppenalarmstatus und eine Aktualisierung des jeweiligen Wertes der Gruppenalarmstatus vorzunehmen, wobei der Operator Station Client dazu ausgebildet ist, eine visuelle Darstellung der Prozessobjekte mit den dazugehörigen Gruppenalarmstatus vorzunehmen.

Unter einem "Operator Station Server" wird vorliegend ein Server verstanden, der zentral Daten eines Bedien- und Beobachtungssystems sowie in der Regel Alarm- und Messwertarchive eines Leitsystems einer Prozessanlage erfasst und Benutzern zur Verfügung stellt. Der Operator Station Server stellt in der Regel eine Kommunikationsverbindung zu Automatisierungssystemen (wie einem Automatisierungsgerät) der Prozessanlage her und gibt Daten der Prozessanlage an sogenannte "Operator Station Clients" weiter, die zur Bedienung und Beobachtung eines Betriebs der einzelnen Funktionselemente der Prozessanlage dienen.

Der Operator Station Server kann selbst über Client-Funktionen verfügen, um auf die Daten (Archive, Meldungen, Tags, Variablen) anderer Operator Station Server zuzugreifen. Dadurch sind Bilder eines Betriebs der Prozessanlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem "Engineering Station Server" wird vorliegend ein Server verstanden, der dazu ausgebildet ist, verschiedene Hardware- und Software-Projekte für ein Leitsystem einer Prozessanlage zu erstellen, verwalten, archivieren und dokumentieren. Mithilfe von speziellen Software-Entwurfswerkzeugen (Engineering Toolset) sowie vorgefertigten Bausteinen und Plänen kann mittels des Engineering Station Servers ein Zusammenspiel von leittechnischen Geräten und Einrichtungen der technischen Anlage geplant und verwaltet werden. Man spricht auch von einem "Engineering" oder einer "Projektierung" der Automatisierung der Prozessanlage. Ein Beispiel für einen solchen Engineering Station Server ist ein SIMATIC Manager Server der Firma SIEMENS.

Bei dem Anlagenbild, welches der auf dem Engineering Station Server erzeugt und von dem Operator Station Server an den Operator Station Client zur visuellen Darstellung übertragbar ist, handelt es sich um ein üblicherweise für Leitsysteme verwendetes Bedienbild, welches in an sich bekannter Weise grafische Repräsentationen einzelner Elemente (hier Prozessobjekte) der Prozessanlage umfasst und zur Darstellung eines Status der einzelnen Elemente, eines (z.B. verfahrenstechnischen) Zusammenhangs zwischen den Elementen oder dgl. dient.

Das Anlagenbild kann zusätzlich zu den Prozessobjekten verschiedene Bildelemente wie eine Alarmmeldungsanzeige, Verbindungsleitungen oder Regler aufweisen.

Der Operator Station Client kann dazu ausgebildet sein, die Prozessobjekte mit den dazugehörigen Gruppenalarmstatus gemäß ihrer hierarchischen Ordnung innerhalb der Prozessanlage visuell darzustellen.

Im Rahmen einer vorteilhaften Weiterbildung des Leitsystems ist im Rahmen der Aktualisierung des jeweiligen Wertes der Gruppenalarmstatus durch den computerimplementierten Alarmverwaltungsdienst der Wert desjenigen Alarmes für den jeweiligen Gruppenalarmstatus bestimmend, welcher eine höchste Priorität und/oder einen neuesten Zeitstempel aufweist und/oder nicht quittiert wurde und/oder von keiner Alarmunterdrückung betroffen ist.

Die obenstehende Aufgabe wird zudem gelöst durch ein Leitsystem für eine Prozessanlage, das einen Operator Station Server, einen Engineering Station Server und einen Operator Station Client aufweist, wobei der Engineering Station Server ein computerimplementiertes Projektierungswerkzeug umfasst, und wobei der Operator Station Server dazu ausgebildet ist, zur visuellen Darstellung eine zuvor durch einen auf dem Engineering Station Server computerimplementiertes Projektierungswerkzeug erzeugte Mehrzahl von Prozessobjekten der Prozessanlage an den Operator Station Client zu übertragen. Dieses Leitsystem ist dadurch gekennzeichnet, dass das computerimplementierte Projektierungswerkzeug dazu ausgebildet ist, für die Mehrzahl von Prozessobjekten jeweils eine automatisierte Zuordnung eines Gruppenalarmstatus zu dem Prozessobjekt und zu einer Prozessvariablen des Prozessobjektes in einer Projektierungsphase der Prozessanlage vorzunehmen, wobei der Gruppenalarmstatus jeweils verschiedene Werte aufweisen kann, und wobei das computerimplementierte Projektierungswerkzeug dazu ausgebildet ist, dem Gruppenalarmstatus jeweils einen initialen Wert zuzuweisen, und wobei der computerimplementierte Alarmverwaltungsdienst des Leitsystems dazu ausgebildet ist, eine Überwachung von in der Prozessanlage aufkommenden Alarmen in einer Betriebsphase der Prozessanlage vorzunehmen, und auf Basis der aufkommenden Alarme eine Identifizierung von durch die Alarme betroffenen Gruppenalarmstatus und eine Aktualisierung des jeweiligen Wertes der Gruppenalarmstatus vorzunehmen, wobei der Operator Station Client dazu ausgebildet ist, eine visuelle Darstellung der Prozessobjekte mit den dazugehörigen Gruppenalarmstatus vorzunehmen.

Analog zum oben ausgeführten Leitsystem kann der Operator Station Client dieses Leitsystems dazu ausgebildet sein, die Prozessobjekte mit den dazugehörigen Gruppenalarmstatus gemäß ihrer hierarchischen Ordnung innerhalb der Prozessanlage visuell darzustellen.

Im Rahmen einer vorteilhaften Weiterbildung dieses Leitsystems ist im Rahmen der Aktualisierung des jeweiligen Wertes der Gruppenalarmstatus durch den computerimplementierten Alarmverwaltungsdienst der Wert desjenigen Alarmes für den jeweiligen Gruppenalarmstatus bestimmend, welcher eine höchste Priorität und/oder einen neuesten Zeitstempel aufweist und/oder nicht quittiert wurde und/oder von keiner Alarmunterdrückung betroffen ist.

Die zuvor formulierte Aufgabe wird zudem gelöst durch die Verwendung eines Leitsystems, welches wie zuvor erläutert ausgebildet ist, zum Betrieb einer Prozessanlage.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Es zeigen:
- FIG 1: ein Objektmodell einer Projektierungs- und einer Betriebsphase eines Leitsystems einer Prozessanlage; und
- FIG 2: ein erfindungsgemäßes Leitsystem in einer Prinzipskizze.

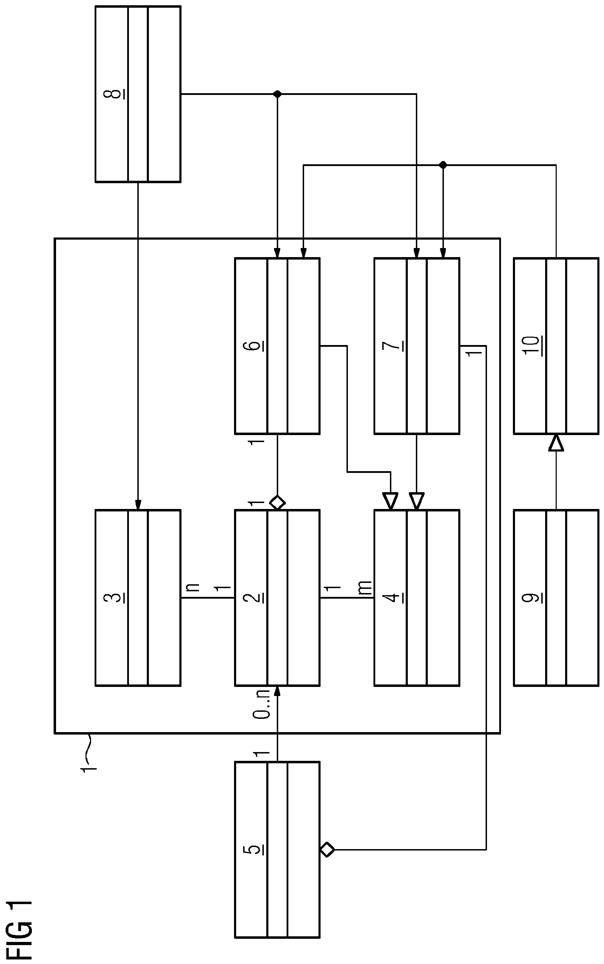

FIG 1 zeigt ein Objektmodell, welches für eine Projektierung und einen Betrieb eines Leitsystems einer Prozessanlage verwendet wird. Ein Prozessabbild 1 bildet Daten ab, die von Prozessobjekten aus der Prozessanlage stammen. Das Prozessabbild 1 umfasst in FIG 1 ein Prozessobjekt 2, einen Alarm 3 und eine Prozessvariable 4. Zudem ist FIG 1 zu entnehmen, dass eine Anzahl von 0 bis n Prozessobjekten 2 einem Anlagenbild 5 zuordenbar sind. FIG 1 zeigt darüber hinaus einen Gruppenalarmstatus 6 für das Prozessobjekt 2 und einen Gruppenalarmstatus 7 für das Anlagenbild 5. Jedem Prozessobjekt 2 ist eine Menge von 1 bis m Prozessvariablen 4 und eine Menge von 1 bis n Alarmen 3 zuordenbar.

In einer Projektierungsphase des Leitsystems der Prozessanlage wird wenigstens einem Prozessobjekt 2 der Gruppenalarmstatus 6 zugeordnet und mit einem initialen Wert versehen (beispielsweise "Inaktiv"). Der Gruppenalarmstatus 6 wird dabei nicht nur dem Prozessobjekt 2 zugeordnet, sondern auch der oder den Prozessvariablen 4 des Prozessobjektes 2. Zudem wird in der Projektierungsphase dem Anlagenbild 5 der Gruppenalarmstatus 7 zugeordnet und mit einem initialen Wert versehen. Auch der Gruppenalarmstatus 7 bezieht sich nicht nur auf das Anlagenbild 5, sondern auch auf die Prozessvariable(n) 4, die dem oder den Prozessobjekten 2 zugeordnet sind, welche wiederum Teil des Anlagenbildes 5 sind. Das Anlagenbild 5 dient dabei mit anderen Worten als eine Klammer um eine Mehrzahl von Prozessobjekten 2 samt der dazugehörigen Prozessvariablen 4.

Das Objektmodell in FIG 1 zeigt darüber hinaus einen computerimplementierten Alarmverwaltungsdienst 8, welcher in einer Betriebsphase des Leitsystems der Prozessanlage auf die Alarme 3 der einzelnen Prozessobjekte 2 zugreifen kann. Der Alarmverwaltungsdienst 8 ist dazu ausgebildet, anhand der empfangenen Alarme 3 aufgrund von bestimmten Attributen und Zuordnungen der Alarme 3 zu bestimmen, welchem Prozessobjekt 2 / Anlagenbild 5 und damit welchem Gruppenalarmstatus 6, 7 der Alarm zuzuordnen ist.

Auf Basis der Zuordnung aktualisiert der Alarmverwaltungsdienst darauf den Wert des Gruppenalarmstatus 6, 7. Besonders vorteilhaft ist dabei, dass jeder Alarm 3 im Wesentlichen nur einmal verarbeitet werden muss, was den Kommunikations- und Rechenaufwand innerhalb des Leitsystems deutlich reduziert.

In FIG 1 ist darüber hinaus ein Hierarchieobjekt 9 (beispielsweise stellvertretend für ein Baumdiagramm) dargestellt, die über ein Alarmanfrageobjekt 10 den Gruppenalarmstatus 6, 7 abfragt, um hieraus eine hierarchische Anordnung von Gruppenalarmstatus 6, 7 des Leitsystems der Prozessanlage erstellen und eine visuelle Darstellung an einen Operator des Leitsystems bereitstellen zu können. Die Hierarchie 9 kann auch eine technologische Hierarchie sein. Weitere Objekte wie Faceplates, Blocksymbole oder dergleichen können auf die Gruppenalarmstatus 6, 7 zugreifen, um spezielle Darstellungen zu erzeugen.

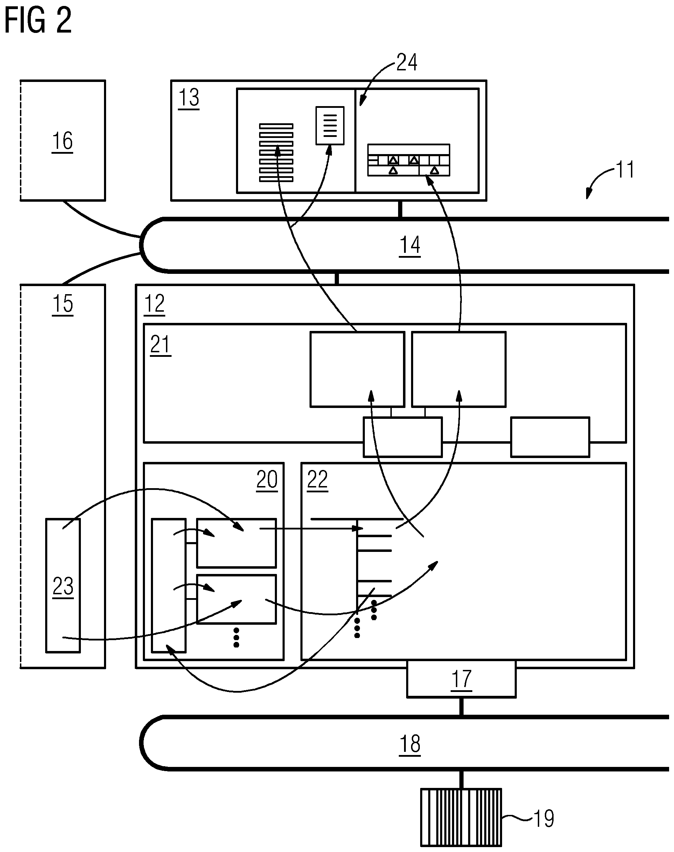

In FIG 2 ist ein Teil eines erfindungsgemäßen Leitsystems 11 einer als Prozessanlage, d.h. als verfahrenstechnische Anlage, ausgebildeten technischen Anlage dargestellt. Das Leitsystem 11 umfasst einen Operator Station Server 12 und einen Operator Station Client 13. Zudem umfasst das Leitsystem 11 einen Engineering Station Server 15 und einen Engineering Station Client 16.

Der Operator Station Server 12, der Engineering Station Server 15, der Operator Station Client 13 und der Engineering Station Client 16 sind über einen Terminalbus 14 miteinander und optional mit nicht dargestellten weiteren Komponenten des Leitsystems 11 wie einem Prozessdatenarchiv verbunden.

Ein Benutzer bzw. Operator kann zum Zwecke des Bedienens und Beobachtens über den Operator Station Client 13 mittels des Terminalbus 14 auf den Operator Station Server 12 zugreifen. Ein Projekteur kann über den Engineering Station Client 16 mittels des Terminalbus 14 auf den Engineering Station Server 15 zugreifen. Der Terminalbus 14 kann, ohne sich darauf zu beschränken, beispielsweise als Industrial Ethernet ausgebildet sein.

Der Operator Station Server 12 weist eine Geräteschnittstelle 17 auf, die mit einem Anlagenbus 18 verbunden ist. Über diese Geräteschnittstelle 17 kann der Operator Station Server 12 mit einem Automatisierungsgerät 19 sowie mit optional vorhandenen weiteren Komponenten der Prozessanlage kommunizieren. Der Anlagenbus 18 kann, ohne sich darauf zu beschränken, beispielsweise als Industrial Ethernet ausgebildet sein. Das Automatisierungsgerät 19 kann mit einer beliebigen Anzahl an Subsystemen (nicht dargestellt) verbunden sein.

Auf dem Operator Station Server 12 sind ein Alarmverwaltungsdienst 20, ein Visualisierungsdienst 21 und ein Prozessabbild 22 computerimplementiert. Auf dem Engineering Station Server 15 ist ein Projektierungswerkzeug 23 computerimplementiert.

Im Folgenden wird der Ablauf eines erfindungsgemäßen Verfahrens beschrieben: Ein Projekteur erstellt mithilfe des computerimplementierten Projektierungswerkzeugs 23 ein Anlagenbild 24, welches eine Mehrzahl von Prozessobjekten 25a, 25b, 25c umfasst. Dabei ordnet er den Prozessobjekten 25a, 25b, 25c und dem Anlagenbild 24 jeweils einen Gruppenalarmstatus 6, 7 zu. Diese Informationen werden in den Operator Station Server 12 geladen und stehen dort dem Alarmverwaltungsdienst 20 zur Verfügung.

Der Alarmverwaltungsdienst 20 überwacht das Prozessabbild 22 auf aufkommende Alarme 3. Der Alarmverwaltungsdienst 20 prüft, ob ein aufkommender Alarm 3 einem der Prozessobjekte 25a, 25b, 25c oder dem Anlagenbild 24 zugeordnet werden kann und aktualisiert daraufhin die Werte der betreffenden Gruppenalarmstatus 6, 7. Das Alarmmanagement findet, bis auf mögliche Ausnahmen, in der Regel über den Alarmverwaltungsdienst 20 statt, was den Kommunikations- und Rechenaufwand für den Operator Station Server 12 deutlich verringern kann.

Über den Visualisierungsdienst 21 wird das Anlagenbild 24 mit den dazugehörigen Prozessobjekten 25a, 25b, 25c (und ggf. weiteren Objekten, denen in der Projektierungsphase kein Gruppenalarm 6, 7 zugewiesen wurde) visuell dargestellt. Dabei werden auch die zu den Prozessobjekten 25a, 25b, 25c und dem Anlagenbild 24 gehörigen Gruppenalarmstatus 6, 7 angezeigt.

Weitere Anwendungen bzw. Objekte können die Gruppenalarmstatus 6, 7 nutzen, um beispielsweise eine hierarchische Anordnung von Gruppenalarmstatus 6, 7 anhand einer technologischen Hierarchie der dazugehörigen Prozessobjekte 2 auf dem Operator Station Client 13 darstellen zu lassen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen

## Patentansprüche

1. Verfahren zur visuellen Darstellung einer Mehrzahl von Prozessobjekten (2) einer Prozessanlage durch ein Leitsystem (11) der Prozessanlage, umfassend:
a) Für die Mehrzahl von Prozessobjekten (2) jeweils automatisierte Zuordnung eines Gruppenalarmstatus (6, 7) zu einem Prozessobjekt (2) und zu einer Prozessvariablen (4) des Prozessobjektes (2) durch ein computerimplementiertes Projektierungswerkzeug (23) des Leitsystems (11) in einer Projektierungsphase der Prozessanlage, wobei der Gruppenalarmstatus (6, 7) jeweils verschiedene Werte aufweisen kann, und wobei dem Gruppenalarmstatus (6, 7) durch das computerimplementierte Projektierungswerkzeug (23) jeweils ein initialer Wert zugewiesen wird,
b) Überwachung von in der Prozessanlage aufkommenden Alarmen (3) durch einen computerimplementierten Alarmverwaltungsdienst (20) des Leitsystems (11) in einer Betriebsphase der Prozessanlage,
c) Auf Basis der aufkommenden Alarme (3) Identifizierung von durch die Alarme (3) betroffenen Gruppenalarmstatus (6, 7) und Aktualisierung des jeweiligen Wertes der Gruppenalarmstatus (6, 7) durch den computerimplementierten Alarmverwaltungsdienst (20) des Leitsystems (11) der Prozessanlage,
d) Visuelle Darstellung der Prozessobjekte (2) mit den dazugehörigen Gruppenalarmstatus (6, 7) durch das Leitsystem (11) der Prozessanlage.

2. Verfahren nach Anspruch 1, bei dem die Prozessobjekte (2) mit den dazugehörigen Gruppenalarmstatus (6, 7) gemäß ihrer hierarchischen Ordnung innerhalb der Prozessanlage visuell dargestellt werden.

3. Verfahren nach einem der vorangegangenen Ansprüche, bei dem bei der Aktualisierung des jeweiligen Wertes der Gruppenalarmstatus (6, 7) durch den computerimplementierten Alarmverwaltungsdienst (20) der Wert desjenigen Alarms (3) für den jeweiligen Gruppenalarmstatus (6, 7) bestimmend ist, welcher eine höchste Priorität und/oder einen neuesten Zeitstempel aufweist und/oder nicht quittiert wurde und/oder von keiner Alarmunterdrückung betroffen ist.

4. Verfahren zur visuellen Darstellung eines Anlagenbildes (24) einer Prozessanlage durch ein Leitsystem (11) der Prozessanlage, umfassend:
a) In einer Projektierungsphase der Prozessanlage Zuordnung einer Mehrzahl von Prozessobjekten (2) zu dem Anlagenbild (24) und automatisierte Zuordnung jeweils eines Gruppenalarmstatus (6, 7) zu dem Anlagenbild (24) sowie zu den Prozessobjekten (2) und zu einer jeweiligen Prozessvariablen (4) der Prozessobjekte (2) durch ein computerimplementiertes Projektierungswerkzeug (23) des Leitsystems (11) der Prozessanlage, wobei der Gruppenalarmstatus (6, 7) jeweils verschiedene Werte aufweisen kann, und wobei dem Gruppenalarmstatus durch das computerimplementierte Projektierungswerkzeug (23) jeweils ein initialer Wert zugewiesen wird,
b) Überwachung von in der Prozessanlage aufkommenden Alarmen (3) durch einen computerimplementierten Alarmverwaltungsdienst (20) des Leitsystems (11) in einer Betriebsphase der Prozessanlage,
c) Auf Basis der aufkommenden Alarme (3) Identifizierung von durch die Alarme (3) betroffenen Gruppenalarmstatus (6, 7) und Aktualisierung des jeweiligen Wertes der Gruppenalarmstatus (6, 7) durch den computerimplementierten Alarmverwaltungsdienst (20) des Leitsystems (11) der Prozessanlage,
d) Visuelle Darstellung des Anlagenbildes (24) und der dazugehörigen Prozessobjekte (2) mit den dazugehörigen Gruppenalarmstatus (6, 7) durch das Leitsystem (11) der Prozessanlage.

5. Verfahren nach Anspruch 4, bei dem die Prozessobjekte (2) mit den dazugehörigen Gruppenalarmstatus (6, 7) gemäß ihrer hierarchischen Ordnung innerhalb der Prozessanlage visuell dargestellt werden.

6. Verfahren nach einem der Ansprüche 4 oder 5, bei dem bei der Aktualisierung des jeweiligen Wertes der Gruppenalarmstatus (6, 7) durch den computerimplementierten Alarmverwaltungsdienst (20) der Wert desjenigen Alarms (3) für den jeweiligen Gruppenalarmstatus (6, 7) bestimmend ist, welcher eine höchste Priorität und/oder einen neuesten Zeitstempel aufweist und/oder nicht quittiert wurde und/oder von keiner Alarmunterdrückung betroffen ist.

7. Leitsystem (11) für eine Prozessanlage, das einen Operator Station Server (12), einen Engineering Station Server (15) und einen Operator Station Client (13) aufweist,
wobei der Engineering Station Server (15) ein computerimplementiertes Projektierungswerkzeug (23) umfasst,
und wobei der Operator Station Server (12) dazu ausgebildet ist, zur visuellen Darstellung eine zuvor durch einen auf dem Engineering Station Server (15) computerimplementiertes Projektierungswerkzeug (23) erzeugte Mehrzahl von Prozessobjekten (2) der Prozessanlage an den Operator Station Client (13) zu übertragen,
**dadurch gekennzeichnet, dass**
das computerimplementierte Projektierungswerkzeug (23) dazu ausgebildet ist, für die Mehrzahl von Prozessobjekten (2) jeweils eine automatisierte Zuordnung eines Gruppenalarmstatus (6, 7) zu dem Prozessobjekt (2) und zu einer Prozessvariablen (4) des Prozessobjektes (2) in einer Projektierungsphase der Prozessanlage vorzunehmen, wobei der Gruppenalarmstatus (6, 7) jeweils verschiedene Werte aufweisen kann, und wobei das computerimplementierte Projektierungswerkzeug (23) dazu ausgebildet ist, dem Gruppenalarmstatus (6, 7) jeweils einen initialen Wert zuzuweisen,
und wobei der computerimplementierte Alarmverwaltungsdienst (20) des Leitsystems (11) dazu ausgebildet ist, eine Überwachung von in der Prozessanlage aufkommenden Alarmen (3) in einer Betriebsphase der Prozessanlage vorzunehmen, und auf Basis der aufkommenden Alarme (3) eine Identifizierung von durch die Alarme (3) betroffenen Gruppenalarmstatus (6, 7) und eine Aktualisierung des jeweiligen Wertes der Gruppenalarmstatus (6, 7) vorzunehmen,
wobei der Operator Station Client (13) dazu ausgebildet ist, eine visuelle Darstellung der Prozessobjekte (2) mit den dazugehörigen Gruppenalarmstatus (6, 7) vorzunehmen.

8. Leitsystem (11) nach Anspruch 7, bei dem der Operator Station Client (13) dazu ausgebildet ist, die Prozessobjekte (2) mit den dazugehörigen Gruppenalarmstatus (6, 7) gemäß ihrer hierarchischen Ordnung innerhalb der Prozessanlage visuell darzustellen.

9. Leitsystem (11) nach Anspruch 7 oder 8, bei dem im Rahmen der Aktualisierung des jeweiligen Wertes der Gruppenalarmstatus (6, 7) durch den computerimplementierten Alarmverwaltungsdienst (20) der Wert desjenigen Alarmes (3) für den jeweiligen Gruppenalarmstatus (6, 7) bestimmend ist, welcher eine höchste Priorität und/oder einen neuesten Zeitstempel aufweist und/oder nicht quittiert wurde und/oder von keiner Alarmunterdrückung betroffen ist.

10. Leitsystem (11) für eine Prozessanlage, das einen Operator Station Server (12), einen Engineering Station Server (15) und einen Operator Station Client (13) aufweist,
wobei der Engineering Station Server (15) ein computerimplementiertes Projektierungswerkzeug (23) umfasst,
und wobei der Operator Station Server (12) dazu ausgebildet ist, zur visuellen Darstellung eine zuvor durch einen auf dem Engineering Station Server (15) computerimplementiertes Projektierungswerkzeug (23) erzeugte Mehrzahl von Prozessobjekten (2) der Prozessanlage an den Operator Station Client (13) zu übertragen,
**dadurch gekennzeichnet, dass**
das computerimplementierte Projektierungswerkzeug (23) dazu ausgebildet ist, die Mehrzahl von Prozessobjekten (2) einem Anlagenbild (24) zuzuordnen und für das Anlagenbild (24) eine automatisierte Zuordnung eines Gruppenalarmstatus (6, 7) vorzunehmen, und für die Mehrzahl von Prozessobjekten (2) jeweils eine automatisierte Zuordnung eines Gruppenalarmstatus (6, 7) zu dem Prozessobjekt (2) und zu einer Prozessvariablen (4) des Prozessobjektes (2) in einer Projektierungsphase der Prozessanlage vorzunehmen, wobei der Gruppenalarmstatus (6, 7) jeweils verschiedene Werte aufweisen kann, und wobei computerimplementierte Projektierungswerkzeug (23) dazu ausgebildet ist, dem Gruppenalarmstatus (6, 7) jeweils einen initialen Wert zuzuweisen,
und wobei der computerimplementierte Alarmverwaltungsdienst (20) des Leitsystems (11) dazu ausgebildet ist, eine Überwachung von in der Prozessanlage aufkommenden Alarmen (3) in einer Betriebsphase der Prozessanlage vorzunehmen, und auf Basis der aufkommenden Alarme (3) eine Identifizierung von durch die Alarme (3) betroffenen Gruppenalarmstatus (6, 7) und eine Aktualisierung des jeweiligen Wertes der Gruppenalarmstatus (6, 7) vorzunehmen,
wobei der Operator Station Client (13) dazu ausgebildet ist, eine visuelle Darstellung des Anlagenbildes (24) und der dazugehörigen Prozessobjekte (2) mit den dazugehörigen Gruppenalarmstatus (6, 7) vorzunehmen.

11. Leitsystem (11) nach Anspruch 10, bei dem der Operator Station Client (13) dazu ausgebildet ist, die Prozessobjekte (2) mit den dazugehörigen Gruppenalarmstatus (6, 7) gemäß ihrer hierarchischen Ordnung innerhalb der Prozessanlage visuell darzustellen.

12. Leitsystem (11) nach Anspruch 10 oder 11, bei dem im Rahmen der Aktualisierung des jeweiligen Wertes der Gruppenalarmstatus (6, 7) durch den computerimplementierten Alarmverwaltungsdienst (20) der Wert desjenigen Alarms (3) für den jeweiligen Wert des Gruppenalarmstatus (6, 7) bestimmend ist, welcher eine höchste Priorität und/oder einen neuesten Zeitstempel aufweist und/oder nicht quittiert wurde und/oder von keiner Alarmunterdrückung betroffen ist.

13. Verwendung eines Leitsystems (11) gemäß einem der Ansprüche 1 bis 12 zum Betrieb einer Prozessanlage.
